# EUROPEAN PATENT APPLICATION

(11) **EP 4 089 812 A1**
(43) Date of publication of application: **16.11.2022**
(21) Application number: 20939715.7
(22) Date of filing: 10.06.2020
(51) Int. Cl.: H01M 50/20, H01M 10/613

(54) **HEAT DISSIPATION SYSTEM, BATTERY MODULE, AND POWER SUPPLY AND DISTRIBUTION SYSTEM**

(71) Applicant: Huawei Digital Power Technologies Co., Ltd., Shenzhen, Guangdong 518043 (CN)
(72) Inventor: HU, Rongheng, Shenzhen, Guangdong 518129 (CN); TONG, Yonghuang, Shenzhen, Guangdong 518129 (CN); LI, Maofan, Shenzhen, Guangdong 518129 (CN)
(74) Representative: Maiwald Patent- und Rechtsanwaltsgesellschaft mbH
(86) International application number: PCT/CN2020/095379
(87) International publication number: WO 2021/248366

(57) **Abstract**

This application discloses a heat dissipation system, a battery module group, and a power supply and distribution system, and relates to the technical field of heat dissipation devices. The heat dissipation system includes a frame and a liquid cooling unit, and the liquid cooling unit includes a liquid cooling plate and a liquid cooling pipeline. The liquid cooling plate is mounted on the frame and disposed in a direction perpendicular to a height direction of the frame. The liquid cooling pipeline is disposed on a side face of the frame, and the liquid cooling pipeline is connected to the liquid cooling plate. The heat dissipation system in embodiments of this application may be configured to dissipate heat for a device for which heat is to be dissipated, such as a battery module. When in use, the device for which heat is to be dissipated may be placed on the liquid cooling plate, and liquid in the liquid cooling pipeline enters the liquid cooling plate, and returns to the liquid cooling pipeline after exchanging heat with the device for which heat is to be dissipated, to dissipate heat for the device for which heat is to be dissipated. When in use, the heat dissipation system in this application does not need to be connected to the device for which heat is to be dissipated. Therefore, in a process of inserting, removing, and maintaining the device for which heat is to be dissipated, disassembly of the liquid cooling unit in the heat dissipation system can be avoided, so that a risk of liquid leakage in the liquid cooling unit can be reduced.

## Description

### TECHNICAL FIELD

This application relates to the technical field of heat dissipation devices, and in particular, to a heat dissipation system, a battery module group, and a power supply and distribution system.

### BACKGROUND

Currently, a liquid cooling heat dissipation technology has been increasingly widely applied to products such as a battery frame and a battery cabinet with high power consumption, to resolve a heat dissipation problem. However, a solution in which a liquid cooling unit is directly fastened to a battery module is generally used in a related liquid cooling heat dissipation system.

Because a fluid connector is disposed on the liquid cooling unit, in a process of maintaining or overhauling the battery module, the liquid cooling unit needs to be inserted and removed together with the battery module. This solution has a risk of liquid leakage in a process of inserting and removing the liquid cooling unit for a plurality of times, and the fluid connector also has a risk of being corroded and blocked. A relatively large security threat exists for the fluid connector.

In addition, when the liquid cooling unit is inserted and removed, the fluid connector needs to be loosened first, and then the battery module is maintained after the fluid connector is blocked. Because it is difficult to maintain on-site sealing detection, after the liquid cooling unit is loosened and then connected, if the liquid cooling unit is not properly sealed, liquid may leak. Once the liquid cooling unit leaks, if leaked liquid is in contact with the battery module, a short circuit may be caused, and a serious security accident is caused.

### SUMMARY

According to a first aspect, this application provides a heat dissipation system. The heat dissipation system includes a frame and a liquid cooling unit, and the liquid cooling unit is fastened to the frame. The liquid cooling unit includes a liquid cooling plate and a liquid cooling pipeline. When the liquid cooling plate is specifically mounted on the frame, the liquid cooling plate may be disposed in a direction perpendicular to a height direction of the frame. When the liquid cooling pipeline is specifically disposed on the frame, the liquid cooling pipeline may be disposed on a side face of the frame, and the liquid cooling pipeline is connected to the liquid cooling plate.

The heat dissipation system in this embodiment of this application may be configured to dissipate heat for a device for which heat is to be dissipated, such as a battery module. When in specific use, the device for which heat is to be dissipated may be placed on the liquid cooling plate, and liquid in the liquid cooling pipeline enters the liquid cooling plate, and returns to the liquid cooling pipeline after exchanging heat with the device for which heat is to be dissipated, to dissipate heat for the device for which heat is to be dissipated. When in use, the heat dissipation system in this application does not need to be connected to the device for which heat is to be dissipated. Therefore, in a process of inserting, removing, and maintaining the device for which heat is to be dissipated, disassembly of the liquid cooling unit in the heat dissipation system can be avoided, so that a risk of liquid leakage in the liquid cooling unit can be effectively reduced, a risk of a short circuit of the device for which heat is to be dissipated can be reduced, and security of inserting and removing the device for which heat is to be dissipated can be effectively improved.

In a possible implementation of this application, a mounting inlet for mounting the device for which heat is to be dissipated into the heat dissipation system may be disposed on the frame. The mounting inlet may be disposed on a side face of the frame. In this case, when the liquid cooling pipeline is specifically disposed on the frame, the liquid cooling pipeline and the mounting inlet may be disposed on a same side of the frame. In such disposing, checking of the liquid cooling pipeline can be facilitated in a hot plugging process of the device for which heat is to be dissipated, to avoid performing, when liquid in the liquid cooling pipeline leaks, hot plugging for the device for which heat is to be dissipated, so that security of hot plugging of the device for which heat is to be dissipated can be improved. Alternatively, the liquid cooling pipeline and the mounting inlet may be disposed on different sides of the frame, so that interference caused by the liquid cooling pipeline to insertion or removing of the device for which heat is to be dissipated can be effectively avoided, and a risk of liquid leakage in the liquid cooling pipeline caused by contact with the liquid cooling pipeline in a process of inserting and removing the device for which heat is to be dissipated can be reduced.

In a possible implementation of this application, when the liquid cooling pipeline is specifically disposed, the liquid cooling pipeline may include a main liquid inlet pipe and a main liquid outlet pipe. The main liquid inlet pipe and the main liquid outlet pipe may be separately fixedly connected to one frame edge of the frame, so that structural stability of the main liquid inlet pipe and the main liquid outlet pipe can be improved. In addition, to connect the liquid cooling pipeline to the liquid cooling plate, the liquid cooling plate may include a liquid inlet and a liquid outlet, the liquid inlet is connected to the main liquid inlet pipe, and the liquid outlet is connected to the main liquid outlet pipe. In this way, liquid in the main liquid inlet pipe in the liquid cooling pipeline may enter the liquid cooling plate, and after exchanging heat with the device for which heat is to be dissipated, liquid in the liquid cooling plate enters the main liquid outlet pipe through the liquid outlet, to dissipate heat for the device for which heat is to be dissipated.

In a possible implementation of this application, to enable the main liquid inlet pipe in the liquid cooling pipeline to be stably connected to the liquid cooling plate, a pipe connector may be further disposed at the liquid inlet of the liquid cooling plate, and the main liquid inlet pipe in the liquid cooling pipeline is connected to the pipe connector at the liquid inlet of the liquid cooling plate. In addition, a pipe connector may be further disposed at the liquid outlet of the liquid cooling plate, and the main liquid outlet pipe in the liquid cooling pipeline is connected to the pipe connector at the liquid outlet of liquid cooling plate, so that a connection between the main liquid outlet pipe and the liquid cooling plate is more reliable.

In a possible implementation of this application, in addition to the foregoing structure, the liquid cooling pipeline may further include a branch liquid inlet pipe and a branch liquid outlet pipe, the branch liquid inlet pipe is connected to the pipe connector at the liquid inlet, and the branch liquid outlet pipe is connected to the pipe connector at the liquid outlet. According to the heat dissipation system in this technical solution, the liquid cooling pipeline may include one main liquid inlet pipe and one main liquid outlet pipe, and one branch liquid inlet pipe connected to the main liquid inlet pipe and one branch liquid outlet pipe connected to the main liquid outlet pipe are correspondingly disposed for each liquid cooling plate, so that a structure of the liquid cooling pipeline can be effectively simplified.

In a possible implementation of this application, when the liquid cooling plate is specifically disposed, there may be a plurality of liquid cooling plates, and the plurality of liquid cooling plates are disposed at intervals in the height direction of the frame. In this way, the heat dissipation system in this embodiment of this application may be configured to simultaneously dissipate heat for a plurality of devices for which heat is to be dissipated, so that heat dissipation efficiency of the heat dissipation system is relatively high.

In a possible implementation of this application, a bent flange may be further disposed on an edge of the liquid cooling plate, and a bending direction of the bent flange is the same as the height direction of the frame. The bent flange may play a role of limiting the device for which heat is to be dissipated that is mounted on the liquid cooling plate, to prevent the device for which heat is to be dissipated from slipping from the liquid cooling plate when the frame in the heat dissipation system tilts. In addition, a height of the bent flange above a surface of the liquid cooling plate may be greater than or equal to 5 mm, so that the bent flange can play a role of stabilizing and limiting.

According to a second aspect, an embodiment of this application further provides a battery module group, and the battery module group includes a battery module and the heat dissipation system in the first aspect. The battery module may be directly placed on the liquid cooling plate in the heat dissipation system, to dissipate heat for the battery module by exchanging heat between the liquid cooling plate and the battery module.

In addition, a mounting ear may be further disposed on the battery module, so that relative positions of the battery module and the liquid cooling plate can be fixed by fixedly connecting the mounting ear to the frame in the heat dissipation system, and the battery module can be in stable contact with the liquid cooling plate.

According to the battery module group in this embodiment of this application, there is no connection relationship between the battery module and the liquid cooling unit in the heat dissipation system. In this way, in a process of inserting and removing the battery module, the liquid cooling unit does not need to be disassembled, so that a case in which liquid in the liquid cooling unit leaks in a hot plugging process of the battery module can be effectively avoided, and therefore a security threat can be reduced. In addition, the battery module is decoupled from the heat dissipation system, and this facilitates pre-integration of a product. For example, integration of the heat dissipation system and sealing detection of the liquid cooling plate, the liquid cooling pipeline, and a connection between the liquid cooling plate and the liquid cooling pipeline are completed before delivery, and then the battery module and the integrated heat dissipation system are delivered together to a site for mounting, so that on-site mounting time can be effectively reduced. In addition, because there is no fixed connection relationship between the battery module and the heat dissipation system, the pipe connector of the liquid cooling plate in the heat dissipation system does not need to be loosened on a mounting site, and it is relatively simple to replace and maintain the battery module.

According to a third aspect, an embodiment of this application further provides a power supply and distribution system. The power supply and distribution system includes a cabinet and the battery module group in the second aspect, and the battery module group is disposed in the cabinet. In addition, the power supply and distribution system further has a connector connected to the battery module by using a signal. The battery module may match and be inserted into an interface of a connector at a corresponding position after being mounted into a heat dissipation system.

According to the power supply and distribution system in this embodiment of this application, there is no connection relationship between the battery module in the battery module group and the liquid cooling unit in the heat dissipation system. In this way, in a process of inserting the battery module into and removing the battery module from the interface of the connector, the liquid cooling unit does not need to be disassembled, so that a case in which liquid in the liquid cooling unit leaks in a hot plugging process of the battery module can be effectively avoided, and therefore a security threat can be reduced. In addition, because the battery module is decoupled from the heat dissipation system, before the battery module group is delivered to a mounting site of the power supply and distribution system, pre-integration and sealing detection of the heat dissipation system may be completed. When the battery module group is mounted on the mounting site, because there is no fixed connection relationship between the battery module and the heat dissipation system, a pipe connector of the liquid cooling plate in the heat dissipation system does not need to be loosened on the mounting site, only the battery module needs to be placed at a corresponding position in the heat dissipation system, and the battery module is inserted into an interface of a connector at the corresponding position. In this way, on-site mounting efficiency of the battery module group can be effectively improved, so that mounting costs are reduced. In addition, it is relatively simple to replace and maintain the battery module.

### BRIEF DESCRIPTION OF DRAWINGS

FIG. 1 is a schematic diagram of a structure of a heat dissipation system according to an embodiment of this application;
FIG. 2 is a schematic diagram of a structure of a liquid cooling plate of a heat dissipation system according to an embodiment of this application;
FIG. 3 is a schematic diagram of a structure of a battery module according to an embodiment of this application;
FIG. 4 is a schematic diagram of a structure of a battery module according to another embodiment of this application; and
FIG. 5 is a schematic diagram of a structure of a power supply and distribution system according to an embodiment of this application.

### Reference numerals:

1-Heat dissipation system; 101-Frame; 102-Liquid cooling plate; 1021-Bent flange; 1022-Pipe connector; 103-Liquid cooling pipeline;
1031-Main liquid inlet pipe; 1032-Main liquid outlet pipe; 1033-Branch liquid inlet pipe; 1034-Branch liquid outlet pipe; 2-Battery module group;
201-Battery module; 202-Mounting ear; 3-Power supply and distribution system; 301-Cabinet.

### DESCRIPTION OF EMBODIMENTS

To make the objectives, technical solutions, and advantages of this application clearer, the following further describes this application in detail with reference to the accompanying drawings.

Terms used in the following embodiments of this application are merely for the purpose of describing specific embodiments, but are not intended to limit this application. Terms "one", "a", "the foregoing", "this", and "the one" of singular forms used in this specification and the appended claims of this application are also intended to include a form like "one or more", unless otherwise specified in the context clearly. It should be further understood that, in the following embodiments of this application, "at least one" or "one or more" means one, two, or more. The term "and/or" is used to describe an association relationship between associated objects, and represents that three relationships may exist. For example, A and/or B may represent the following cases: Only A exists, both A and B exist, and only B exists. A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", have "and variants of the terms all mean", include but are not limited to, the statements mean "unless otherwise specifically emphasized in another manner.", unless otherwise specifically emphasized in another manner. The terms "include", "have", and variants of the terms all mean "include but are not limited to", unless otherwise specifically emphasized in another manner.

To facilitate understanding of a heat dissipation system provided in embodiments of this application, the following first describes a specific application scenario of the heat dissipation system. The heat dissipation system provided in embodiments of this application may be, but not limited to, applied to a system with relatively high heat production, such as a battery module group, to dissipate heat for a battery module in the battery module group. Currently, a liquid cooling system is generally used as a heat dissipation system in the battery module group. During design of the heat dissipation system, a liquid cooling unit in the heat dissipation system and a device for which heat is to be dissipated (for example, the battery module) are usually integrated as a whole, and a structure of the heat dissipation system is relatively complex. In addition, because the liquid cooling unit and the device for which heat is to be dissipated are integrated as a whole, in a process of maintaining or overhauling the device for which heat is to be dissipated, the liquid cooling unit in the heat dissipation system needs to be inserted and removed together with the device for which heat is to be dissipated. In this solution, in a process of inserting and removing the liquid cooling unit for a plurality of times, a risk of liquid leakage exists for the liquid cooling unit, and a fluid connector of the liquid cooling unit also has a risk of being corroded and blocked. A relatively large security threat exists. In addition, when the liquid cooling unit is inserted and removed, the fluid connector needs to be loosened first, and then the device for which heat is to be dissipated is maintained after the fluid connector is blocked. Because it is difficult to maintain on-site sealing detection, after the liquid cooling unit is loosened and then connected, if the liquid cooling unit is not properly sealed, liquid may leak. Once the liquid cooling unit leaks, if leaked liquid is in contact with the device for which heat is to be dissipated, a short circuit may be caused, and a serious security accident is caused. The heat dissipation system in embodiments of this application is intended to resolve the foregoing problem, to reduce a risk of liquid leakage in the heat dissipation system by decoupling the heat dissipation system from the device for which heat is to be dissipated. The following describes the heat dissipation system in embodiments of this application in detail with reference to the accompanying drawings.

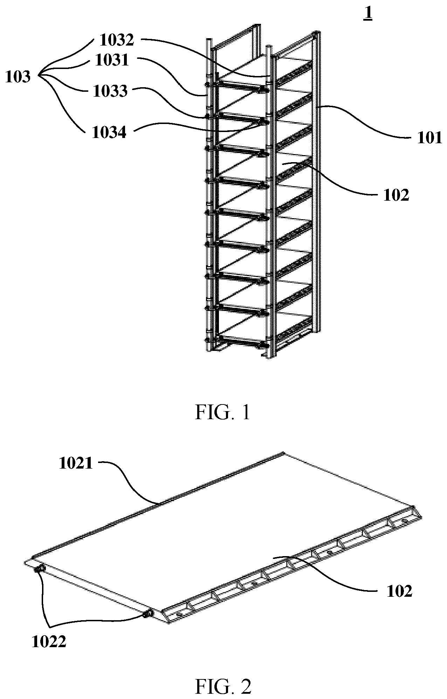

As shown in FIG. 1, a heat dissipation system 1 according to an embodiment of this application includes a frame 101 and a liquid cooling unit disposed on the frame 101, and the liquid cooling unit includes a liquid cooling plate 102 and a liquid cooling pipeline 103. The liquid cooling plate 102 is fastened to the frame 101, and the liquid cooling plate 102 and the frame 101 may be, but not limited to, connected by using a fastener such as a screw. A liquid circulation channel is disposed on the liquid cooling plate 102, and the liquid cooling pipeline 103 is connected to the liquid circulation channel, so that liquid in the liquid cooling pipeline 103 flows through the liquid circulation channel to take away heat generated by a device for which heat is to be dissipated, to dissipate heat for the device for which heat is to be dissipated.

In some embodiments of this application, when the liquid cooling plate 102 is disposed on the frame 101, the liquid cooling plate 102 may be mounted on the frame 101 in a direction perpendicular to a height direction of the frame 101. In this way, when the heat dissipation system 1 is used to dissipate heat for the device for which heat is to be dissipated, the device for which heat is to be dissipated may be directly placed on the liquid cooling plate 102, so that the device for which heat is to be dissipated is in stable contact with the liquid cooling plate 102, and heat of the device for which heat is to be dissipated may be dissipated in a manner of exchanging heat. In addition, the liquid cooling plate 102 may further play a role of supporting the device for which heat is to be dissipated, to avoid disposing an additional supporting structure on the frame 101, so that a structure of the heat dissipation system 1 can be simplified.

Still refer to FIG. 1. When there are two or more liquid cooling plates 102, two adjacent liquid cooling plates 102 may be spaced apart by a specific distance, and a size of the spaced distance may be set based on a size of the device for which heat is to be dissipated, so that the device for which heat is to be dissipated may be mounted into the heat dissipation system 1 between the two liquid cooling plates 102. According to the heat dissipation system 1 in this embodiment of this application, the heat dissipation system 1 can simultaneously dissipate heat for a plurality of devices for which heat is to be dissipated, so that heat dissipation efficiency can be improved. It may be understood that an interval between two adjacent liquid cooling plates 102 may be greater than a height size of the device for which heat is to be dissipated. In this way, in a scenario such as maintaining or replacing the device for which heat is to be dissipated, hot plugging of the device for which heat is to be dissipated may be implemented without disassembling the liquid cooling plate 102, so that a risk of liquid leakage on the liquid cooling plate 102 can be effectively reduced, and security of hot plugging of the device for which heat is to be dissipated can be improved.

In addition, refer to FIG. 2. A bent flange 1021 may be further disposed on the liquid cooling plate 102, and a bending direction of the bent flange 1021 is the same as the height direction of the frame 101. The bent flange 1021 may play a role of limiting the device for which heat is to be dissipated that is mounted on the liquid cooling plate 102, to prevent the device for which heat is to be dissipated from slipping from the liquid cooling plate 102 when the frame 101 in the heat dissipation system 1 tilts. A height of the bent flange 1021 above a surface of the liquid cooling plate may be greater than or equal to 5 mm, so that the bent flange 1021 can play a role of stabilizing and limiting.

The bent flange 1021 may be disposed on only one edge of the liquid cooling plate 102, for example, an edge that is of the liquid cooling plate 102 in a direction in which the device for which heat is to be dissipated is mounted into the heat dissipation system 1 and that is opposite to a mounting inlet. In this case, the bent flange 1021 can not only prevent the device for which heat is to be dissipated from slipping from the liquid cooling plate 102, but can also play a role of limiting insertion of the device for which heat is to be dissipated into an interface of a connector, so that the device for which heat is to be dissipated is in stable contact with the interface of the connector, to implement stable signal transmission between the device for which heat is to be dissipated and the interface of the connector. In some possible embodiments, the bent flange 1021 may be further disposed on all edges of the liquid cooling plate 102 except an edge at the mounting inlet, to prevent the device for which heat is to be dissipated from slipping from the liquid cooling plate 102, and to prevent from blocking insertion or removing of the device for which heat is to be dissipated. It may be understood that one bent flange 1021 may be disposed on one edge of the liquid cooling plate 102, or two bent flanges 1021 in opposite directions may be disposed in the height direction of the frame 101.

Still refer to FIG. 2. A pipe connector 1022 is further disposed on the liquid cooling plate 102, and the pipe connector 1022 may be, but not limited to, disposed on any edge of the liquid cooling plate 102. The pipe connector 1022 is configured to connect to the liquid circulation channel of the liquid cooling plate 102, to serve as an interface for the liquid to enter or flow out of the liquid cooling plate 102. A quantity of pipe connectors 1022 may be set based on a quantity of liquid circulation channels. Because each liquid circulation channel includes one liquid inlet and one liquid outlet, for example, when the liquid cooling plate 102 includes one liquid circulation channel, one pipe connector 1022 may be disposed for each of a liquid inlet and a liquid outlet of the liquid circulation channel. To facilitate understanding, in embodiments of this application, the structure of the heat dissipation system 1 is described by using an example in which the liquid cooling plate 102 includes one liquid circulation channel.

Still refer to FIG. 1. To dissipate, by using the liquid cooling plate 102, heat for the device for which heat is to be dissipated, the liquid circulation channel of the liquid cooling plate 102 needs to be connected to the liquid cooling pipeline 103, to pass liquid into the liquid circulation channel of the liquid cooling plate 102 by using the liquid cooling pipeline 103. When the liquid cooling pipeline 103 is specifically disposed, the liquid cooling pipeline 103 may include a main liquid inlet pipe 1031 and a main liquid outlet pipe 1032. In this way, the liquid inlet of the liquid cooling plate 102 may be connected to the main liquid inlet pipe 1031, and the liquid outlet of the liquid cooling plate 102 is connected to the main liquid outlet pipe 1032.

When a connection between the liquid cooling plate 102 and the liquid cooling pipeline 103 is specifically implemented, the liquid cooling pipeline 103 may further include a branch liquid inlet pipe 1033 and a branch liquid outlet pipe 1034. The branch liquid inlet pipe 1033 is connected to the main liquid inlet pipe 1031, and the branch liquid outlet pipe 1034 is connected to the main liquid outlet pipe 1032. In this case, the pipe connector 1022 at the liquid inlet of the liquid circulation channel of the liquid cooling plate 102 may be connected to the branch liquid inlet pipe 1033, and the pipe connector 1022 at the liquid outlet of the liquid circulation channel is connected to the branch liquid outlet pipe 1034. In this way, liquid in the main liquid inlet pipe 1031 in the liquid cooling pipeline 103 may enter the liquid circulation channel of the liquid cooling plate 102 through the branch liquid inlet pipe 1033. After exchanging heat with the device for which heat is to be dissipated, liquid in the liquid cooling plate 102 enters the branch liquid outlet pipe 1034, and then enters the main liquid outlet pipe 1032, to dissipate heat for the device for which heat is to be dissipated.

According to the heat dissipation system 1 in this technical solution, the liquid cooling pipeline 103 may include one main liquid inlet pipe 1031 and one main liquid outlet pipe 1032, and one branch liquid inlet pipe 1033 connected to the main liquid inlet pipe 1031 and one branch liquid outlet pipe 1034 connected to the main liquid outlet pipe 1032 are correspondingly disposed for each liquid cooling plate 102, so that a structure of the liquid cooling pipeline 103 can be effectively simplified.

When the liquid cooling pipeline 103 is disposed on the frame 101 in the heat dissipation system 1, refer to FIG. 1. The main liquid inlet pipe 1031 in the liquid cooling pipeline 103 may be disposed in the height direction of the frame 101, and the main liquid outlet pipe 1032 is disposed in the height direction of the frame 101. In addition, the main liquid inlet pipe 1031 and the main liquid outlet pipe 1032 may be respectively fastened to one frame edge of the frame 101, so that the structure of the heat dissipation system 1 can be effectively simplified, and checking and maintenance of the liquid cooling pipeline 103 can be facilitated.

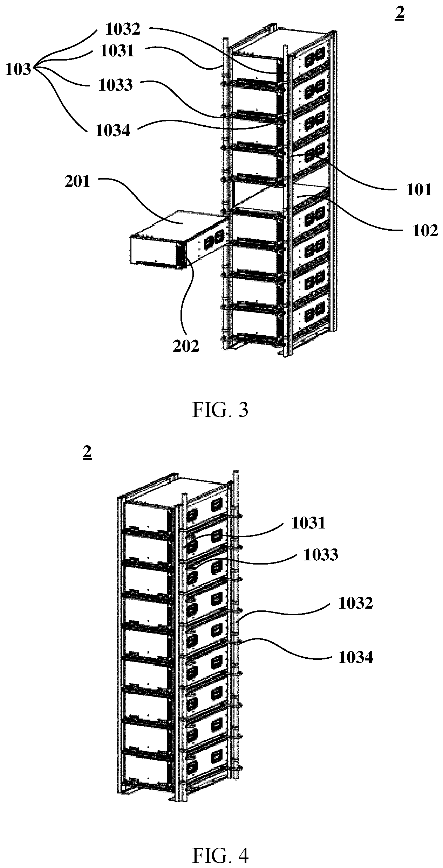

In a possible embodiment of this application, the main liquid inlet pipe 1031 and the main liquid outlet pipe 1032 in the liquid cooling pipeline 103 may be disposed on a same side of the frame 101. For example, refer to FIG. 3. Both the main liquid inlet pipe 1031 and the main liquid outlet pipe 1032 may be disposed on a side that is of the frame 101 and that is used to mount the device for which heat is to be dissipated into the mounting inlet of the heat dissipation system 1. In such disposing, in a hot plugging process of the device for which heat is to be dissipated, checking of the liquid cooling pipeline 103 can be facilitated, to avoid performing hot plugging on the device for which heat is to be dissipated when liquid in the liquid cooling pipeline 103 leaks, so that security of hot plugging of the device for which heat is to be dissipated can be improved.

In some other embodiments, refer to FIG. 4. Both the main liquid inlet pipe 1031 and the main liquid outlet pipe 1032 may alternatively be disposed on either of two side faces of the frame 101 that are disposed opposite to each other in a direction perpendicular to a direction in which the device for which heat is to be dissipated is mounted. In this way, the main liquid inlet pipe 1031 and the main liquid outlet pipe 1032 in the liquid cooling pipeline 103 can be effectively prevented from causing interference to insertion or removing of the device for which heat is to be dissipated, so that a risk of liquid leakage in the main liquid inlet pipe 1031 and the main liquid outlet pipe 1032 caused by contact with the main liquid inlet pipe 1031 and the main liquid outlet pipe 1032 in a process of inserting and removing the device for which heat is to be dissipated can be reduced. It may be understood that, descriptions of specific disposing positions of the main liquid inlet pipe 1031 and the main liquid outlet pipe 1032 in the liquid cooling pipeline 103 in the heat dissipation system 1 in the foregoing embodiment are merely several example descriptions provided in this application. In some other embodiments of this application, the main liquid inlet pipe 1031 and the main liquid outlet pipe 1032 in the liquid cooling pipeline 103 may alternatively be disposed at other positions in the heat dissipation system 1. Details are not described herein.

In addition, regardless of a side that is of the frame 101 and on which the main liquid inlet pipe 1031 and the main liquid outlet pipe 1032 of the liquid cooling pipeline 103 are disposed, the branch liquid inlet pipe 1033 and the branch liquid outlet pipe 1034 may be disposed on a same side of the frame 101 as the main liquid inlet pipe 1031 and the main liquid outlet pipe 1032. It may be understood that, in this case, the liquid inlet and the liquid outlet of the liquid cooling plate 102 may alternatively be disposed on a same side of the frame 101, the liquid inlet of the liquid cooling plate 102 is disposed close to the main liquid inlet pipe 1031, and the liquid outlet is disposed close to the main liquid outlet pipe 1032. In this way, lengths of the branch liquid inlet pipe 1033 and the branch liquid outlet pipe 1034 can be effectively shortened, to help reduce time used by the liquid to enter the liquid cooling plate 102 from the liquid cooling pipeline 103 or to flow out from the liquid cooling plate 102 to the liquid cooling pipeline 103. Therefore, heat dissipation efficiency of the heat dissipation system 1 can be improved. In addition, the main liquid inlet pipe 1031, the main liquid outlet pipe 1032, the branch liquid inlet pipe 1033, and the branch liquid outlet pipe 1034 in the liquid cooling pipeline 103, and the liquid inlet and the liquid outlet of the liquid cooling plate 102 are all disposed on a same side of the frame 101, to help improve neatness and beauty of the heat dissipation system 1.

Based on a same inventive concept, refer to FIG. 3 or FIG. 4. An embodiment of this application further provides a battery module group 2. The battery module group 2 includes the heat dissipation system 1 (refer to FIG. 1) in any one of the foregoing embodiments and a battery module 201. The battery module 201 may be disposed in the heat dissipation system 1, and be in contact with the liquid cooling plate 102, so that the liquid cooling plate 102 plays a role of dissipating heat for the battery module 201.

In addition, when the liquid cooling plate 102 is mounted on the frame 101 in the heat dissipation system 1 in a direction perpendicular to a height direction of the frame 101, the battery module 201 may be placed on the liquid cooling plate 102, so that the battery module 201 is in stable contact with the liquid cooling plate 102, to improve heat dissipation efficiency of the liquid cooling plate 102 for the battery module 201. The liquid cooling plate 102 is mounted in the direction perpendicular to the height direction of the frame 101, so that the liquid cooling plate 102 can play a role of supporting the battery module 201 disposed on the liquid cooling plate 102. In this way, disposing of an additional supporting structure on the frame 101 can be avoided, so that a structure of the heat dissipation system 1 can be simplified. In addition, an area of the liquid cooling plate 102 may be greater than or equal to an area in which the battery module 201 is in contact with the liquid cooling plate 102, so that heat exchanging efficiency between the battery module 201 and the liquid cooling plate 102 can be effectively improved.

In a possible embodiment of this application, refer to FIG. 3. A mounting ear 202 may further be disposed on the battery module 201. In this way, after the battery module 201 is placed on the liquid cooling plate 102, to prevent the battery module 201 from slipping from the liquid cooling plate 102, the mounting ear 202 on the battery module 201 and the frame 101 in the heat dissipation system 1 may be fastened and connected by using a fastener such as a screw.

According to the battery module group 2 in this embodiment of this application, there is no connection relationship between the battery module 201 and a liquid cooling unit in the heat dissipation system 1. In this way, in a process of inserting and removing the battery module 201, the liquid cooling unit does not need to be disassembled, so that a case in which liquid in the liquid cooling unit leaks in a hot plugging process of the battery module 201 can be effectively avoided, and therefore a security threat can be reduced. In addition, the battery module 201 is decoupled from the heat dissipation system 1, and this facilitates pre-integration of a product. For example, integration of the heat dissipation system 1 and sealing detection of the liquid cooling plate 102, the liquid cooling pipeline 103, and a connection between the liquid cooling plate 102 and the liquid cooling pipeline 103 are completed before delivery, and then the battery module 201 and the integrated heat dissipation system 1 are delivered together to a site for mounting, so that on-site mounting time can be effectively reduced. In addition, because there is no fixed connection relationship between the battery module 201 and the heat dissipation system 1, a pipe connector 1022 of the liquid cooling plate 102 in the heat dissipation system 1 does not need to be loosened on the mounting site, and it is relatively simple to replace and maintain the battery module 201.

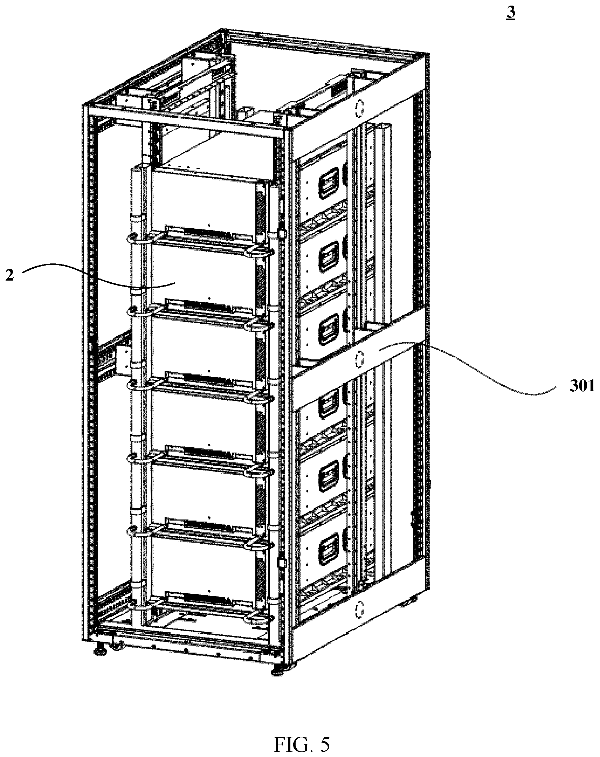

The battery module group 2 in this embodiment of this application may be, but not limited to, applied to a power supply and distribution system such as a server. Refer to FIG. 5. An embodiment of this application further provides a power supply and distribution system 3. The power supply and distribution system 3 includes a cabinet 301, and a battery module group 2 may be disposed in the cabinet 301. In addition, the power supply and distribution system 3 further has a connector connected to a battery module 201 by using a signal. The battery module 201 may match and be inserted into an interface of a connector at a corresponding position after being mounted into a heat dissipation system 1.

According to the power supply and distribution system 3 in this embodiment of this application, there is no connection relationship between the battery module 201 in the battery module group 2 and a liquid cooling unit in the heat dissipation system 1. In this way, in a process of inserting the battery module 201 into and removing the battery module 201 from the interface of the connector, the liquid cooling unit does not need to be disassembled, so that a case in which liquid in the liquid cooling unit leaks in a hot plugging process of the battery module 201 can be effectively avoided, and therefore a security threat can be reduced. In addition, because the battery module 201 is decoupled from the heat dissipation system 1, before the battery module group 2 is delivered to a mounting site of the power supply and distribution system 3, pre-integration and sealing detection of the heat dissipation system 1 may be completed. When the battery module 2 is mounted on the mounting site, because there is no fixed connection relationship between the battery module 201 and the heat dissipation system 1, a pipe connector 1022 of the liquid cooling plate 102 in the heat dissipation system 1 does not need to be loosened on the mounting site, only the battery module 201 needs to be placed at a corresponding position in the heat dissipation system 1 and be inserted to an interface of a connector at the corresponding position. In this way, on-site mounting efficiency of the battery module group 2 can be effectively improved, so that mounting costs are reduced. In addition, it is relatively simple to replace and maintain the battery module 201.

It is clear that a person skilled in the art can make various modifications and variations to this application without departing from the protection scope of this application. This application is intended to cover these modifications and variations of this application provided that they fall within the scope of protection defined by the claims of this application and equivalent technologies thereof.

## Claims

1. A heat dissipation system, comprising a frame and a liquid cooling unit, wherein
the liquid cooling unit comprises a liquid cooling plate and a liquid cooling pipeline;
the liquid cooling plate is mounted on the frame and disposed in a direction perpendicular to a height direction of the frame; and
the liquid cooling pipeline is disposed on a side face of the frame, and the liquid cooling pipeline is connected to the liquid cooling plate.

2. The heat dissipation system according to claim 1, wherein there is a mounting inlet on a side face of the frame, and the liquid cooling pipeline and the mounting inlet are disposed on a same side of the frame, or the liquid cooling pipeline and the mounting inlet are disposed on different sides of the frame.

3. The heat dissipation system according to claim 1 or 2, wherein the liquid cooling pipeline comprises a main liquid inlet pipe and a main liquid outlet pipe, and the main liquid inlet pipe and the main liquid outlet pipe are separately fixedly connected to one frame edge of the frame; and
the liquid cooling plate comprises a liquid inlet and a liquid outlet, wherein the liquid inlet is connected to the main liquid inlet pipe, and the liquid outlet is connected to the main liquid outlet pipe.

4. The heat dissipation system according to claim 3, wherein a pipe connector is disposed at each of the liquid inlet and the liquid outlet, the main liquid inlet pipe is connected to the pipe connector at the liquid inlet, and the main liquid outlet pipe is connected to the pipe connector at the liquid outlet.

5. The heat dissipation system according to claim 4, wherein the liquid cooling pipeline further comprises a branch liquid inlet pipe and a branch liquid outlet pipe, the branch liquid inlet pipe is connected to the pipe connector at the liquid inlet, and the branch liquid outlet pipe is connected to the pipe connector at the liquid outlet.

6. The heat dissipation system according to any one of claims 1 to 5, wherein a bent flange is disposed on an edge of the liquid cooling plate, and a bending direction of the bent flange is the same as the height direction of the frame.

7. The heat dissipation system according to claim 6, wherein a height of the bent flange above a surface of the liquid cooling plate is greater than or equal to 5 mm

8. The heat dissipation system according to any one of claims 1 to 7, wherein there are a plurality of liquid cooling plates, and the plurality of liquid cooling plates are disposed at intervals in the height direction of the frame.

9. A battery module group, comprising a battery module and the heat dissipation system according to any one of claims 1 to 8, wherein the battery module is placed on the liquid cooling plate.

10. The battery module according to claim 9, wherein a mounting ear is disposed on the battery module, and the mounting ear is fixedly connected to the frame in the heat dissipation system.

11. A power supply and distribution system, comprising a cabinet, a connector, and the battery module group according to claim 9 or 10, wherein the battery module group is disposed in the cabinet, and the battery module in the battery module group matches and is inserted into an interface of the connector after being mounted into the heat dissipation system.
